# EUROPEAN PATENT SPECIFICATION

(11) **EP 1 122 928 B1**
(45) Date of publication and mention of the grant of the patent: **08.03.2006**
(21) Application number: 00311009.5
(22) Date of filing: 11.12.2000
(51) Int. Cl.: H04L 29/06, H04L 12/58

(54) **A system and method for authentication of electronic messages sent to a network server**
System und Verfahren zur Authentifizierung von an einen Netzwerkserver gesendeten elektronischer Nachrichten
Procédé et système d'authentification de méssages électroniques envoyés à un serveur réseau

(30) Priority: 27.12.1999 US 472636
(43) Date of publication of application: 08.08.2001
(73) Proprietor: Hewlett-Packard Company, Palo Alto, CA 94304 (US)
(72) Inventor: Winter, Kirt Alan, San Diego, CA 92127 (US)
(74) Representative: Carpmaels & Ransford

(56) References cited:
- EP-A- 0 720 333
- GB-A- 2 343 529

## Description

### FIELD OF THE INVENTION

The present invention relates in general to electronic messaging and more particularly to a system and a method for authenticating electronic messages sent to a network server to prevent the delivery of any unwanted, unsolicited or unauthorized electronic messages.

### BACKGROUND OF THE INVENTION

Electronic messaging (such as electronic mail or "e-mail") is a popular and widely used form of communication. In general, an electronic message is generated by a messaging machine or client (such as an e-mail client computer) connected to a network, sent to a network server and delivered over the network to a receiving client. A typical way for the messaging client and the network server to be connected is over a public wide-area network (such as the Internet). For example, to send an e-mail a user may dial their local Internet service provider (ISP) and connect to a mail server, which sends the e-mail to a recipient across the Internet.

One problem, however, with providing a network server that can be accessed by the general public is that the server can be easily accessed by unscrupulous persons to send unwanted, unsolicited or unauthorized messages (herein referred to as unsolicited messages). These unsolicited messages, which are also known as unsolicited commercial e-mail (UCE), unsolicited bulk e-mail (UBE) and "spam", are messages that, regardless of their content, are sent to recipients who have not specifically requested and do not want to receive the messages. Unsolicited messages are generally commercial in nature and are typically sent by persons who have purchased or generated a list of network addresses (such as e-mail addresses) for the purpose of advertising.

There are several techniques currently available for preventing the sending of unsolicited messages through a public network server. One technique involves a user who is sending a message entering a password in order to gain access to the network server. A problem with this technique is that a user is required to choose and remember a password, which usually must be changed at regular and frequent intervals. Further, the user's messaging machine must be configured for the password. Because the password may be forgotten or stolen and the configuration of the user's messaging machine may be difficult for some users, the password technique can lead to considerable user confusion and frustration. Another technique protects the network server behind a "firewall", which is a system that prevents the message server from being accessed by unauthorized persons. However, a problem with this technique is that a firewall prevents most users from even connecting to the message server and thus limits the availability of the message server to the general public. Other techniques encrypt the entire message when the message is sent over the network so that only encrypted message are accepted by the network server. The disadvantage, however, with this technique is that encryption and decryption of the entire message uses valuable system resources and reduces system speed.

Therefore, there is needed is an efficient, effective and simple system and method that prevents the delivery of unsolicited messages sent to a message server that can be accessed by the general public. This system and method would not rely on a user password to access the message server thus eliminating the need to remember a password and configure the password on the user's messaging machine. In addition, the system and method would not use a firewall technique and would allow members of the general public having a legitimate need access to the mail server.

### SUMMARY OF THE INVENTION

To overcome the limitations in the prior art as described above, and to overcome other limitations that will become apparent upon reading and understanding the present specification, the present invention is embodied in a system according to claim 7 and a method according to claim 1 for authenticating electronic messages sent to a network server to prevent the delivery of any unwanted, unsolicited or unauthorized electronic messages. The present invention provides an efficient, effective and simple way to prevent the delivery of unsolicited messages sent to a public message server. The present invention does not require passwords, firewalls or encryption of the message for security. Instead, a ticket is attached to a message that allows authentication by the network server and permits the message to be delivered.

The message authentication system of the present invention includes a messaging client at a remote location and a token module located on a network server. Both the messaging client and token module separately and independently generate identical tickets. One of the tickets is attached by the messaging client to an electronic message and allows one electronic message to be sent through the network server. The other ticket is stored in a valid ticket database. When the network server receives a request to send an electronic message, the server uses a message module to authenticate the message. Authentication occurs if the ticket attached to the electronic message matches a stored ticket in the valid ticket database. An authenticated message is sent to a receiving client, and a non-authenticated message is not delivered.

The present invention also embodied in a method for authenticating an electronic message sent through a network server. The method includes preparing the electronic message for authentication by receiving a token from the network server, generating a first ticket at a remote location and attaching the first ticket to the electronic message. In addition, an identical second ticket is generated, using the same token and algorithmic manipulation, on the network server. The authentication process occurs when the message module of the network server receives an electronic message over the network. The message is examined to determine if there is a ticket attached, and, if so, the ticket is compared to tickets in the valid ticket database. If the tickets match, the electronic message is authenticated and delivered. Otherwise, the message is not delivered.

Other aspects and advantages of the present invention as well as a more complete understanding thereof will become apparent from the following detailed description, taken in conjunction with the accompanying drawings, illustrating by way of example the principles of the invention. Moreover, it is intended that the scope of the invention be limited by the claims and not by the preceding summary or the following detailed description.

### BRIEF DESCRIPTION OF THE DRAWINGS

The present invention can be further understood by reference to the following description and attached drawings that illustrate the preferred embodiment. Other features and advantages will be apparent from the following detailed description of the preferred embodiment, taken in conjunction with the accompanying drawings, which illustrate, by way of example, the principles of the present invention.

Referring now to the drawings in which like reference numbers represent corresponding parts throughout:
FIG. 1 is an overall block diagram of an electronic messaging system incorporating the present invention.
FIG. 2 is a block diagram illustrating an apparatus for carrying out the present invention.
FIG. 3 is a block diagram illustrating the messaging client, network server and receiving client of the present invention.
FIG. 4,is a detailed flow diagram illustrating the operation of the present invention.

### DETAILED DESCRIPTION OF THE PREFERRED EMBODIMENTS

In the following description of the invention, reference is made to the accompanying drawings, which form a part thereof, and in which is shown by way of illustration a specific example whereby the invention may be practiced. It is to be understood that other embodiments may be utilized and structural changes may be made without departing from the scope of the present invention.

### I. Introduction

Unsolicited commercial electronic messages are a widespread problem that bother and annoy users of public networks. Accordingly, eliminating the delivery of such electronic messages is quite appealing for both users and administrators of public networks. The present invention provides a simple, effective and efficient way to ensure the only authorized messages are delivered through a network server. The present invention does not rely on passwords (that can be lost or stolen and require users to configure their systems), firewalls (that isolate the network server) or encryption of the entire message (that can burden system resources). Instead, the present invention provides an authentication system and process whereby only electronic messages that have a valid ticket attached may be sent through the network server.

In order to obtain a valid ticket to send an electronic message through the network server, a messaging client must first request a token from the network server. This token is a unique value that is randomly generated to avoid duplication by others. The token and an algorithmic manipulation are used to generate two identical tickets: one on the messaging client and one on the network server. Both of these tickets are generated separately and independently of each other. Because each ticket is generated independently of the other, neither ticket needs to be transmitted over the network. This alleviates the possibility of a ticket being intercepted by others. A first ticket is attached by the messaging client to the electronic message to be sent, and a second ticket is stored on the network server in a valid ticket database.

The authentication process occurs each time the network server receives an electronic message for delivery. The network server determines whether the electronic message has a ticket attached. If not, then the message is not delivered. Otherwise, the attached ticket is compared to tickets within the valid ticket database. If the attached ticket matches a ticket in the valid ticket database, then the electronic message is authenticated and the message is delivered to the addressee. The attached ticket is removed from the message and its corresponding ticket is removed from the valid ticket database. If no matches are found for the attached ticket then the ticket is considered fraudulent or void and the message is not delivered.

Security in the present invention is accomplished in several ways. First, a unique token is randomly generated to ensure the token cannot be guessed or duplicated by others. Second, separate and independent generation of identical tickets using the same algorithmic manipulations and using the unique token prevent others from creating their own ticket. Further, because the ticket by itself is not sent over the network, others are prevented from stealing the ticket off the network. Finally, a preferred embodiment also uses a security value that is known only to the messaging client and the network server. This security value is used with the token when generating the tickets and further ensures that the ticket cannot be duplicated or stolen.

### II. General Overview

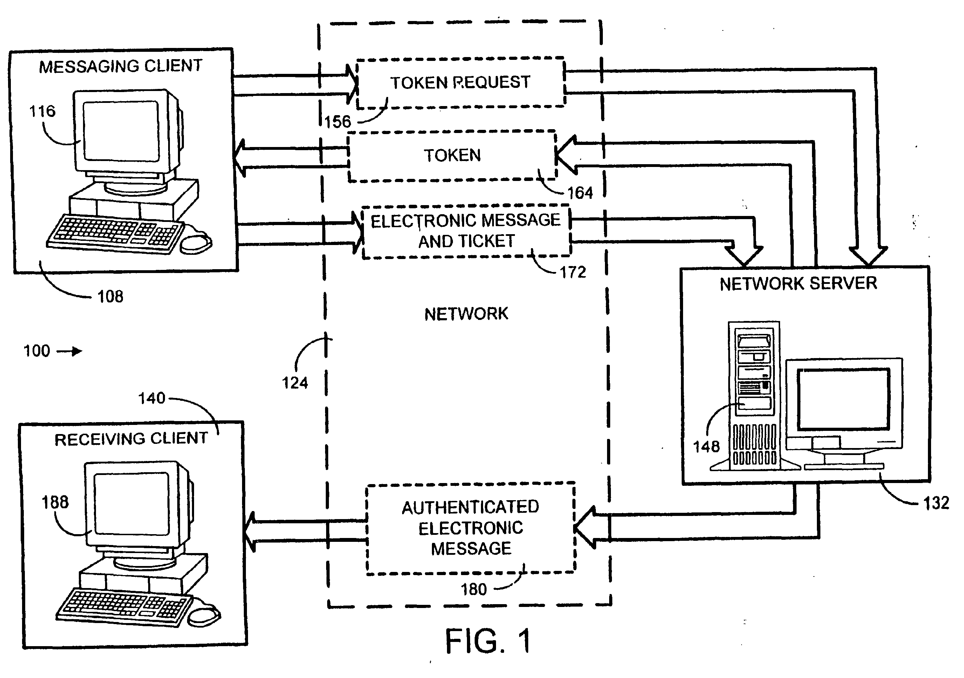

FIG. 1 is a block diagram of an electronic messaging system that incorporates the present invention. In general, the electronic messaging system 100 includes a messaging client 108 that uses a messaging machine 116 (such as a computer) to generate and send an electronic message over a network 124, to a network server 132, back over the network 124 and to a receiving client 140 at a specified network address. The network 124 may be, for example, a cable connecting the messaging client 108 and the receiving client 140 to the network server 132 via digital or analog telephone lines, wireless communication (such as infrared and satellite) or other forms of communication. Preferably, the network 124 is a network that is used by the general public, such as a wide area network (WAN), but may also be a local area network (LAN).

The messaging client 108 uses a messaging machine 116 that is any device that permits connection to the network 124 and is capable of generating and transmitting an electronic message over the network 124 to the network server 132. For instance, the messaging machine 116 may be a desktop or notebook computer having a modem and an e-mail application residing on the computer. Further, the messaging machine 116 may be a message appliance that allows a user to place a document in a document feeder, select a network address, have the message appliance connect to the network server 132 over the network 124 and deliver the message to the receiving client 140.

The network server 132 manages the flow of information over the network 124 and includes a message authentication system 148. The message authentication system 148 authenticates the electronic message and determines whether the electronic message should be delivered to the receiving client 140. As discussed further below, the message authentication system 148 includes several modules. Preferably, these modules are combined to reside the network server 132 but, alternatively, may be separated and located on different network servers.

The electronic messaging system 100 of the present invention operates by initially sending a token request 156 from the messaging client 108 over the network 124 to the network server 132. The message authentication system 148 on the network server 132 returns a token 164 over the network 124 to the messaging client 108. As discussed further below, the messaging client then generates a ticket and combines the ticket with a desired electronic message for transmission. The messaging client 108 transmits the electronic message and ticket 172 over the network 124 to the message authentication system 148 for authentication. If the message authentication system 148 determines that the electronic message should be delivered, an authenticated electronic message 180 is transmitted over the network 124 to the receiving client 140.

Similar to the messaging client 108, the receiving client 140 uses a receiving machine 188 that may be any device that permits connection to the network 124 and is capable of receiving the authenticated electronic message 180. For example, the receiving machine 188 may be a desktop or notebook computer having a modem and an e-mail application residing on the computer or a message appliance.

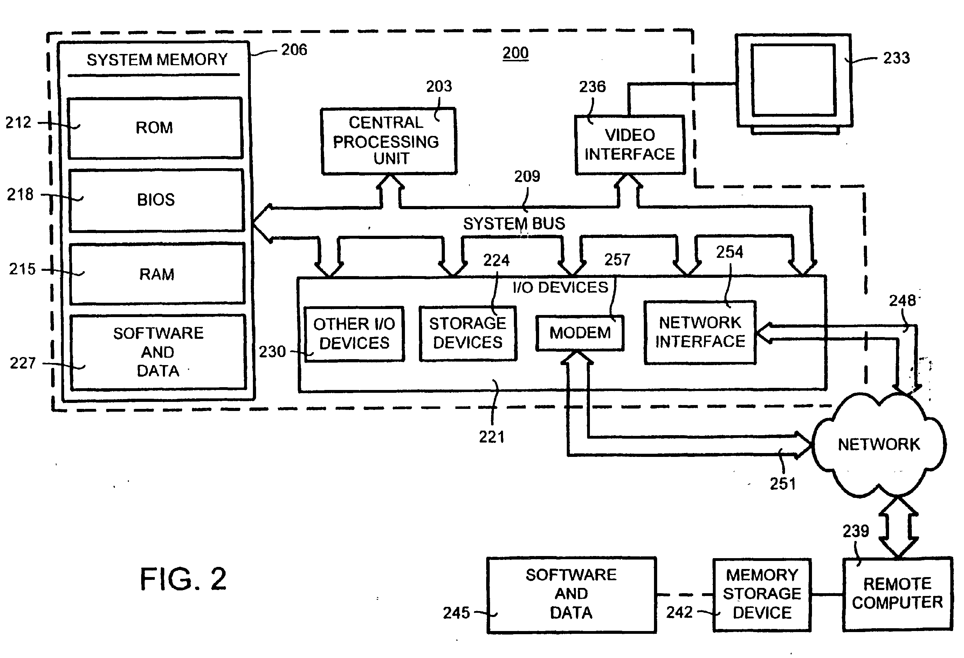

FIG. 2 is a block diagram illustrating an apparatus for carrying out the present invention. The following discussion provides a general description of a suitable computing environment in which the present invention may be implemented. The invention will be described in the general context of computer-executable instructions (such as program modules) being executed by a computer.

As shown in FIG. 2, an exemplary system for implementing the present invention includes a general-purpose computing device in the form of a conventional computer 200. The computer 200 includes a central processing unit 203, a system memory 206 and a system bus 209. The system bus 209, which couples various system components including the system memory 206 to the central processing unit 203, may be any of several types of bus structures including memory bus or memory controller, a peripheral bus and a local bus using any of a variety of bus architectures.

The system memory 206 includes computer storage media in the form of read-only memory (ROM) 212 and random access memory (RAM) 215. A basic input/output system (BIOS) 218 is stored in the ROM 212 and contains the basic routines that help transfer information between components of the computer 200, such as during start-up.

The computer 200 also includes input/output (I/O) devices 221 for interfacing with the outside environment. I/O devices 221 may include storage devices 224 that store, for instance, data and program modules. The storage devices 224 include, for example, a hard disk drive, for reading from and writing to a hard disk, a magnetic disk drive, for reading from and writing to a removable magnetic disk, and an optical disk drive, for reading from and writing to a removable optical disk (such as, for example, a CD-ROM or other type of optical media). These drives and their associated computer-readable media provide storage of computer-readable instructions, data structures, program modules and other data for the computer 200. Although the exemplary environment described herein employs a hard disk, a removable magnetic disk and a removable optical disk, it should be appreciated that those skilled in the art would recognize that other types of computer-readable media can store data that can be accessed by the computer 200. Thus, computer-readable media may be any available media that is accessible by the computer 200. By way of example and not limitation, computer-readable media includes communication media and computer storage media.

For example, computer storage media includes RAM, ROM, erasable programmable read-only memory (EPROM), flash memory and other types of memory technology, CD-ROM, digital video disks (DVD) and other types of optical storage media, magnetic cassettes, magnetic tape, magnetic disk storage and other types of magnetic storage devices, and any other medium that can be used to store the desired information and that is accessible by the computer 200. Further, any combinations of the above is also included within the meaning of computer-readable media.

Numerous program modules may be stored on the hard disk, magnetic disk, optical disk, ROM 212 and RAM 215 including software and data 227. Software and data 227 include, for example, application programs, other program modules and program data. A user may interact with the computer 200 by entering commands and information through other I/O devices 230 such as a keyboard and pointing device (such as a mouse). Further, other I/O devices 230 may include, for example, a microphone, joystick, game pad, satellite dish, scanner, video camera, digital camera, and the like. These and other I/O devices 230 may be connected to the central processing unit 203 through, for example, a serial port, a parallel port, game port or a universal serial bus (USB) that is coupled to the system bus 209. A monitor 233 or other type of display device is connected to the system bus 209 through a video interface 236 (such as a video adapter). Further, additional peripheral devices (such as speakers and printers) may be connected to the computer 200.

The computer 200 may be operated in a networked environment using logical connections to one or more remote computers (such as a remote computer 239). The remote computer 239 may be a personal computer (PC), a server, a router, a network PC, a peer device or other type of network node, and typically includes several or all of the elements described above in connection with the computer 200. Only a memory storage device 242 having software and data 245 residing thereon, however, has been illustrated with the remote computer 239 in FIG. 2. The logical connections shown in FIG. 2 include a local area network (LAN) 248 and a wide area network (WAN) 251, such as, for example, the Internet and World-Wide Web (WWW). Such networking environments are commonplace in offices, enterprise-wide computer networks, intranets and the Internet.

If the computer 200 is used in a LAN networking environment, the computer 200 is coupled to the local network 248 through a network interface 254 (such as a network adapter). If the computer 200 is used in a WAN networking environment, the computer 200 is generally coupled to the WAN (such as the Internet) through a modem 257 or other means for establishing communications over the WAN (such as a cable modem).

In a networked environment, program modules depicted relative to the computer 200, or portions thereof, may be stored in the remote memory storage device 242. Further, in a networked environment the execution of computer-readable instructions within the program modules as well as processing and data manipulation may occur on the computer 200, the remote computer 239, or both. It will be appreciated that the network connections shown are exemplary and other means of establishing a communications link and transferring data between the computer 200 and the remote computer 239 may be used.

### III. System and Operational Details

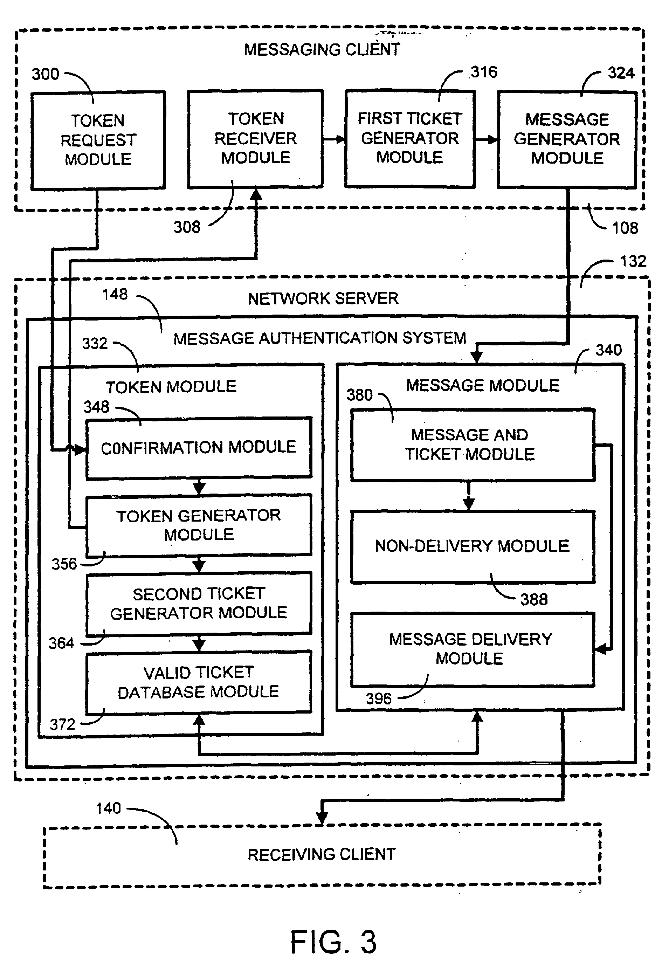

FIG. 3 is a block diagram illustrating the messaging client, network server and receiving client of the present invention. Although not required, the invention will be described in the general context of computer-executable instructions, such as program modules, being executed by a computer. These program modules generally include routines, programs, objects, components, data structures, etc. that perform specific operations or implement particular abstract data types. Moreover, those skilled in the art will appreciate that the invention may be practiced with a variety of computer system configurations, including personal computers, server computers, hand-held devices, multiprocessor systems, microprocessor-based or programmable consumer electronics, network PCs, minicomputers, mainframe computers, and the like. The invention may also be practiced in distributed computing environments where tasks are performed by remote processing devices that are linked through a network. In a distributed computing environment, program modules may be located on both local and remote computer storage media including memory storage devices.

Referring to FIG. 3 along with FIG. 1, the messaging client 108 of the present invention includes a token request module 300, for transmitting the token request 156 to the message authentication system 148, and a token receiver module 308, for receiving the token request 156. The messaging client 108 also includes a first ticket generator module 316, which generates a ticket, and a message generator module 324, which transmits a combined electronic message and generated ticket to the network server 132.

The message authentication system 148 includes a token module 332, which generates authentication data used to authenticate the electronic message and ticket, and a message module 340, which validates the authentication data and approves transmission of the message. Preferably, the token module 332 and the message module 340 are contained on the network server 132, but may, however, alternatively be contained on separate servers.

The token module 332 includes a confirmation module 348 coupled to the token request module 300, a token generator module 356 generates a token and sends the token to the token receiver module 308 of the messaging client 108, a second ticket generator module 364 and a message generator module 324. The message module 340 includes a message and ticket module 380 coupled to the message generator module 324, a non-delivery module 388 and a message delivery module 396.

When the messaging client 108 desires to send an electronic message through the network server 132 the token request module 300 sends the token request 156 over the network 124. The token request 156 is received by the confirmation module 348, which validates the token request 156 and directs the token generator module 356 to generate the token 164. The token 164 is transmitted to the token receiver module 308 and to the first ticket generator module 316, which uses the token 164 to generate a first ticket. The first ticket is attached to the electronic message by the message generator module 324 and the electronic message and ticket 172 are sent over the network 124 to the message module 380.

Meanwhile, the token generator module 356 also sends the token 164 to the second ticket generator module 364. Using the token 164, a second ticket is generated that is identical to the first ticket but independently and separately generated. The second ticket is sent to the valid ticket database module 372 for storage in a valid ticket database. The valid ticket database module 372 is coupled to the message module 340 to provide the message module 340 access to the valid ticket database.

When the messaging module 340 receives an electronic message over the network 124, the electronic message is sent to the message and ticket module 380 for authentication. Specifically, if a ticket attached to an electronic message matches a ticket in the valid ticket database, then the electronic message is authenticated. For example, when the electronic message and ticket 172 is received by the message and ticket module 380 the attached first ticket is compared to the valid ticket database. Because the first ticket matches the second ticket in the valid ticket database, the message is authenticated.

If a received electronic message cannot be authenticated, the message is sent to the non-delivery module 388. The non-authenticated message is not sent to the receiving client 140, and instead the message may be deleted or other operations (such as writing to a security log) are performed. If the message is authenticated, the message is sent to the message delivery module 396, which transmits the authenticated electronic message 180 over the network 124 to the receiving client 140.

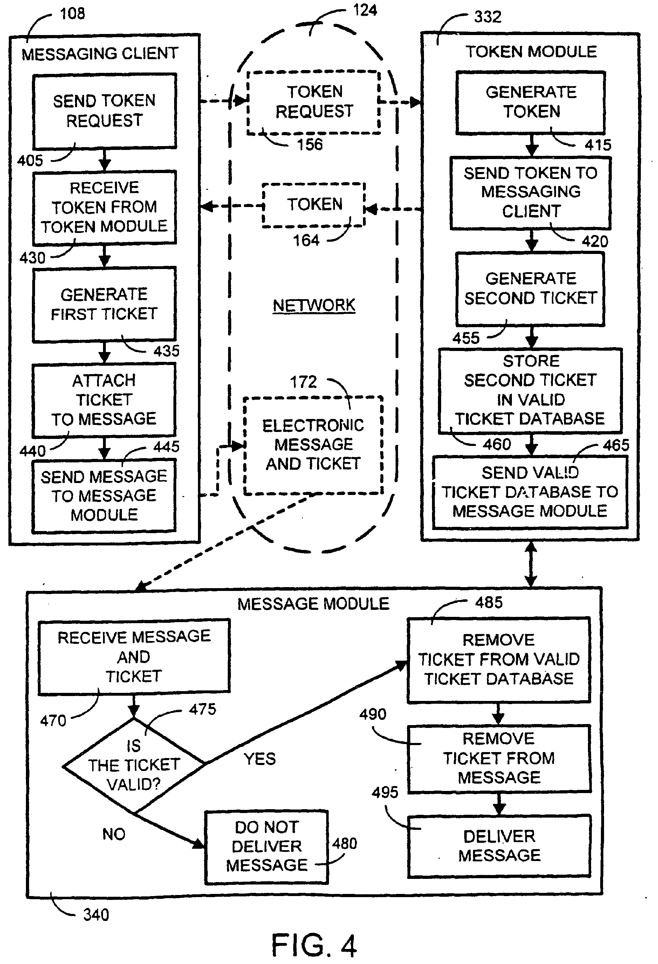

FIG. 4 is a detailed flow diagram illustrating the operation of the present invention. The messaging client initiates the transmission of an electronic message by sending a token request (box 405) over the network 124 to the token module 332. Preferably, the token request 156 includes an initialization value that is unique to every messaging client 108 and known only to the messaging client and the message authentication system 148 (such a serial number of the messaging client 108). The token request 156 provides an initial verification that the client requesting the token has authority to send an electronic message through the network server 132.

Upon receiving the token request 415 the token module generates a token (box 415). In a preferred embodiment, the token 164 is a random value that is determined using a random number generator. The length of the token 164 should be long enough to provide security and prevent guessing but short enough to prevent taxing system resources. In a preferred embodiment, the token 164 is a random number of at least 256-bit or longer in length. Using a 256 bit or larger token length increases security by ensuring that a duplicate token will not be generated, in other words, that each token is unique. The token module 332 then sends the token 164 to the messaging client (box 420) over the network 124.

The token 164 is received from the token module (box 430) and a first ticket is generated (box 435). The first ticket is generated by performing an algorithmic manipulation of the initialization value and the token 164. For additional security, a preferred embodiment uses a security value that is mutually known by the messaging client 108 and the message authentication system 148. Preferably, the length of the security value is at least 256 bits. Any type of algorithmic manipulation may be used to discourage the decoding and theft of the first ticket. The algorithmic manipulation should only be known by the messaging client 108 and the message authentication system 148. By way of example, the first ticket may be generated by scrambling the digits of the initialization value, the token 164 and the security value. Once a first ticket has been generated the first ticket is attached to the electronic message to be sent (box 440) and allows the messaging client 108 to route one message through the network server 132. The electronic message and ticket 172 are then sent (box 445) over the network 124 to the message module 340.

Meanwhile, the token module 332 generates a second ticket (box 455) using the identical algorithmic manipulation used in generating the first ticket. Thus, the first ticket and the second ticket are identical but are generated independently and separately. The second ticket is stored in a valid ticket database (box 460) and the valid ticket database is sent to the message module (box 465). Preferably, for additional security, the second ticket is valid only for a limited time. This means that if the second ticket is not used within a certain time period (such as from five minutes to one hour) the second ticket is removed from the valid ticket database.

The message module 340 receives the electronic message and ticket (box 470) along with any other messages addressed to the message module 340 and sent over the network 124. Each received message is tested for authenticity by determining whether the attached ticket is valid (box 475). If the message has a ticket attached that is not in the valid ticket database, or if the message does not have an attached ticket, the message is not authenticated and therefore not delivered (box 480). The unauthenticated message may be deleted, stored in a security file, logged in a security log, or any other option as determined by a user of the system.

If the received message does have an attached ticket that is in the valid ticket database, the message is authenticated. For example, the electronic message and ticket 172 has attached the first ticket that matches the second ticket located in the valid ticket database. Thus, the electronic message is authenticated. Once a message is authenticated, the ticket is removed from the valid ticket database (box 485) and the corresponding attached ticket is removed from the message (box 490). The authenticated message is then delivered to the receiving client 140 by sending the message through the network server 132 and over the network 124.

The foregoing description of the preferred embodiments of the invention has been presented for the purposes of illustration and description. It is not intended to be exhaustive or to limit the invention to the precise form disclosed. Accordingly, the foregoing description should be regarded as illustrative rather than restrictive, and it should be appreciated that variations may be made in the embodiments described by workers skilled in the art without departing from the scope of the present invention as defined by the following claims.

## Claims

1. A method for authenticating an electronic message sent by a messaging client (108) to a network server (132) over a network (124), comprising:
comparing a first ticket attached to the electronic message (172) to a second ticket stored in a valid ticket database (460); and
delivering the electronic message (495) to a receiving client if the first ticket is identical to the second ticket (475);
wherein the first and second tickets are generated (435, 455) independently on the messaging client (108) and the network server (132), respectively.

2. The method of claim 1, wherein the first ticket and second tickets are generated (435, 455) using the same algorithmic manipulation.

3. The method of claim 2, wherein the algorithmic manipulation uses a token (164).

4. The method of claim 1, further comprising removing the second ticket from the valid ticket database (485) if the first and second tickets are identical.

5. The method of claim 1, further comprising removing the first ticket from the electronic message (490) if the first and second tickets are identical.

6. The method of claim 2, wherein the second ticket is stored in the valid ticket database (460) for a certain time period.

7. A message authentication system (148) for authenticating an electronic message sent to a network server (132) over a network (124), comprising:
a messaging client (108) at a remote location adapted to generate a first ticket (435) and attach the first ticket to the electronic message (440);
a token module (332) adapted to generate a second ticket (455) to be stored in a valid ticket database (460); and
a message module (340) adapted to compare the first and second tickets and authenticate the electronic message if the first and second tickets are identical (475).

8. The message authentication system (148) of claim 7, wherein the token module (332) comprises a token generator module (356) adapted to generate a token.

9. The message authentication system (148) of claim 8, wherein both a first ticket generator module (316), located on the messaging client (108), adapted to generate the first ticket and a second ticket generator module (364), located on the token module (332), adapted to generate the second ticket are adapted to use the token.

10. The message authentication system (148) of claim 7, further comprising a valid ticket database module (372) adapted to store the second ticket in the valid ticket database for only a limited time period.

11. The message authentication system (148) of claim 7, wherein the message module (340) further comprises a message delivery module (396) adapted to deliver the authenticated electronic message (180) to a receiving client (140).

12. The message authentication system (148) of claim 11, wherein the message delivery module (396) is adapted to separate the first ticket from the electronic message (490) and remove the second ticket from the valid ticket database (485).

## Patentansprüche

1. Ein Verfahren zum Authentifizieren einer elektronischen Nachricht, die durch einen Nachrichtenübermittlungsclienten (108) über ein Netz (124) an einen Netzserver (132) gesendet wird, mit folgenden Schritten:
Vergleichen eines ersten Etiketts, das an der elektronischen Nachricht (172) angebracht ist, mit einem zweiten Etikett, das in einer Datenbank gültiger Etiketten gespeichert ist (460); und
Liefern (495) der elektronischen Nachricht an einen empfangenden Clienten, wenn das erste Etikett identisch zu dem zweiten Etikett ist (475),
wobei das erste und das zweite Etikett unabhängig von dem Nachrichtenübermittlungsclienten (108) bzw. dem Netzserver (132) erzeugt werden (435, 455).

2. Das Verfahren gemäß Anspruch 1, bei dem das erste Etikett und zweite Etiketten unter Verwendung der gleichen algorithmischen Manipulation erzeugt werden (435, 455).

3. Das Verfahren gemäß Anspruch 2, bei dem die algorithmische Manipulation ein Token (164) verwendet.

4. Das Verfahren gemäß Anspruch 1, das ferner ein Entfernen (485) des zweiten Etiketts aus der Datenbank gültiger Etiketten, wenn das erste und das zweite Etikett identisch sind, aufweist.

5. Das Verfahren gemäß Anspruch 1, das ferner ein Entfernen (490) des ersten Etiketts aus der elektronischen Nachricht, wenn das erste und das zweite Etikett identisch sind, aufweist.

6. Das Verfahren gemäß Anspruch 2, bei dem das zweite Etikett für einen bestimmten Zeitraum in der Datenbank gültiger Etiketten gespeichert wird (460).

7. Ein Nachrichtenauthentifizierungssystem (148) zum Authentifizieren einer elektronischen Nachricht, die über ein Netz (124) an einen Netzserver (132) gesendet wird, mit folgenden Merkmalen:
einem Nachrichtenübermittlungsclienten (108) an einem entfernten Ort, der angepasst ist, um ein erstes Etikett zu erzeugen (435) und das erste Etikett an die elektronische Nachricht anzufügen (440);
einem Token-Modul (332), das angepasst ist, um ein zweites Etikett zu erzeugen (455), das in einer Datenbank gültiger Etiketten gespeichert werden soll (460); und
einem Nachrichtenmodul (340), das angepasst ist, um das erste und das zweite Etikett zu vergleichen und die elektronische Nachricht zu authentifizieren, wenn das erste und das zweite Etikett identisch sind (475).

8. Das Nachrichtenauthentifizierungssystem (148) gemäß Anspruch 7, bei dem das Token-Modul (332) ein Token-Generatormodul (356) aufweist, das angepasst ist, um ein Token zu erzeugen.

9. Das Nachrichtenauthentifizierungssystem (148) gemäß Anspruch 8, bei dem sowohl ein erstes Etikettgeneratormodul (316), das sich auf dem Nachrichtenübermittlungsclienten (108) befindet und angepasst ist, um das erste Etikett zu erzeugen, als auch ein zweites Etikettgeneratormodul (364), das sich auf dem Token-Modul (332) befindet und angepasst ist, um das zweite Etikett zu erzeugen, angepasst sind, um das Token zu verwenden.

10. Das Nachrichtenauthentifizierungssystem (148) gemäß Anspruch 7, das ferner ein Datenbankmodul (372) gültiger Etiketten aufweist, das angepasst ist, um das zweite Etikett nur für einen eingeschränkten Zeitraum in der Datenbank gültiger Etiketten zu speichern.

11. Das Nachrichtenauthentifizierungssystem (148) gemäß Anspruch 7, bei dem das Nachrichtenmodul (340) ferner ein Nachrichtenliefermodul (396) aufweist, das angepasst ist, um die authentifizierte elektronische Nachricht (180) an einen empfangenden Clienten (140) zu liefern.

12. Das Nachrichtenauthentifizierungssystem (148) gemäß Anspruch 11, bei dem das Nachrichtenliefermodul (396) angepasst ist, um das erste Etikett von der elektronischen Nachricht zu trennen (490) und das zweite Etikett aus der Datenbank gültiger Etiketten zu entfernen (485).

## Revendications

1. Procédé d'authentification d'un message électronique envoyé par un client de messagerie (108) à un serveur réseau (132) sur un réseau (124), comprenant :
la comparaison d'un premier ticket attaché au message électronique (172) à un second ticket stocké dans une base de données de tickets valides (460) ; et
l'acheminement du message électronique (495) à un client de réception si le premier ticket est identique au second ticket (475) ;
dans lequel les premier et second tickets sont générés (435, 455) quels que soient le client de messagerie (108) et le serveur réseau (132), respectivement.

2. Procédé selon la revendication 1, dans lequel le premier ticket et le second ticket sont générés (135, 455) en utilisant la même manipulation algorithmique.

3. Procédé selon la revendication 2, dans lequel la manipulation algorithmique utilise un jeton (164).

4. Procédé selon la revendication 1, comprenant en outre le retrait du second ticket de la base de données de tickets valides (485) si les premier et second tickets sont identiques.

5. Procédé selon la revendication 1, comprenant en outre le retrait du premier ticket du message électronique (490) si les premier et second tickets sont identiques.

6. Procédé selon la revendication 2, dans lequel le second ticket est stocké dans la base de données de tickets valides (460) pendant une certaine période de temps.

7. Système d'authentification de message (148) destiné à authentifier un message électronique envoyé à un serveur réseau (132) sur un réseau (124), comprenant :
un client de messagerie (108) à distance adapté pour générer un premier ticket (435) et attacher le premier ticket au message électronique (440) ;
un module de jeton (332) adapté pour générer un second ticket (455) à stocker dans une base de données de tickets valides (460) ; et
un module de message (340) adapté pour comparer les premier et second tickets et authentifier le message électronique si les premier et second tickets sont identiques (475).

8. Système d'authentification de message (148) selon la revendication 7, dans lequel le module de jeton (332) comprend un module de génération de jeton (356) adapté pour générer un jeton.

9. Système d'authentification de message (148) selon la revendication 8, dans lequel un module de génération de premier ticket (316), situé sur le client de messagerie (108) adapté pour générer le premier ticket, et un module de génération de second ticket (364), situé sur le module de jeton (332), adapté pour générer le second ticket, sont tous les deux adaptés pour utiliser le jeton.

10. Système d'authentification de message (148) selon la revendication 7, comprenant en outre un module de base de données de tickets valides (372) adapté pour stocker le second ticket dans la base de données de tickets valides pendant seulement une période de temps limitée.

11. Système d'authentification de message (148) selon la revendication 7, dans lequel le module de message (340) comprend en outre un module d'acheminement de message (396) adapté pour acheminer le message électronique authentifié (180) vers un client de réception (140).

12. Système d'authentification de message (148) selon la revendication 11, dans lequel le module d'acheminement de message (396) est adapté pour séparer le premier ticket du message électronique (490) et retirer le second ticket de la base de données de tickets valides (485).
